# EUROPÄISCHE PATENTSCHRIFT

(11) **EP 3 210 808 B1**
(45) Veröffentlichungstag und Bekanntmachung des Hinweises auf die Patenterteilung: **26.12.2018**
(21) Anmeldenummer: 17157522.8
(22) Anmeldetag: 23.02.2017
(51) Int. Cl.: B60J 5/06

(54) **PLANENROLLER UND NUTZFAHRZEUG MIT EINEM PLANENAUFBAU**
CANVAS ROLLER AND INDUSTRIAL VEHICLE WITH CANVAS COVER
ENROULEUR DE BÂCHE ET VÉHICULE UTILITAIRE ÉQUIPÉ D'UNE BÂCHE

(30) Priorität: 23.02.2016 DE 102016103172
(43) Veröffentlichungstag der Anmeldung: 30.08.2017
(73) Patentinhaber: Schmitz Cargobull AG, 48341 Altenberge (DE)
(72) Erfinder: Derks, Roger Geradus Christiaan, 5922 XT Venlo (NL); Hornig, Stefan, 48565 Steinfurt (DE); Schouwink, Christian, 48161 Münster (DE)
(74) Vertreter: Cohausz & Florack

(56) Entgegenhaltungen:
- EP-A1- 2 902 228
- EP-A2- 2 540 598
- EP-A2- 2 759 432
- EP-B1- 2 371 595
- DE-A1- 19 756 617
- DE-A1-102014 104 428

## Beschreibung

Die Erfindung betrifft einen Planenroller für eine verschiebbare Lagerung einer Seitenplane an einer Führung eines Planenaufbaus für ein Nutzfahrzeug gemäß dem Oberbegriff von Anspruch 1.

Ebenso betrifft die Erfindung ein Nutzfahrzeug mit einem Planenaufbau, bei dem Planenroller der erfindungsgemäßen Art zum Einsatz kommen.

Planenaufbauten der hier in Rede stehenden Art werden auch als "Planenaufbauten" oder "Curtain-Sider-Aufbauten" bezeichnet. Sie sind in der Regel quaderförmig ausgebildet und umschließen einen über einer Ladefläche errichteten Laderaum, in dem das von dem Nutzfahrzeug zu transportierende Gut verstaut wird. Bei den mit solchen Aufbauten versehenen Nutzfahrzeugen handelt es sich typischerweise um aktiv angetriebene Lastkraftwagen oder Anhänger für solche Lastkraftwagen sowie Sattelauflieger, die gemeinsam mit einer sie ziehenden Zugmaschine einen Sattelzug bilden.

Beispiele für einen Planenroller und einen damit ausgestatteten Planenaufbau sind in der EP 2 759 432 A2 beschrieben. Der dort vorgestellte Planenroller weist eine Traglasche auf, an der zwei Rollen gelagert sind, die um achsparallel und mit Abstand zueinander angeordnete Drehachsen drehbar sind. Im Gebrauch sind diese Rollen in einer Führung längsverschiebbar geführt, die an einem Längsträger des jeweiligen Planenaufbaus ausgebildet sind. Die Drehachsen der Rollen sind dabei in Gebrauchsstellung quer zur Schwerkraftrichtung ausgerichtet.

Zusätzlich ist an der Traglasche ein Anschlagelement zum Anschlagen der Plane an dem Planenroller ausgebildet. Bei diesem Anschlagelement handelt es sich um einen Steg, der im in Gebrauchsstellung unteren Randbereich der aus Blech gestanzten Traglasche dadurch gebildet ist, dass in die Traglasche ein fensterartiger Schlitz eingeformt ist. Zum Anschlagen der Plane wird ein streifenförmiger Verbindungsabschnitt, bei dem es sich beispielsweise um einen mit der Plane verbundenen textilen Riemenabschnitt handeln kann, durch den Schlitz gefädelt und um den als Anschlagelement wirkenden Steg geschlungen. Das freie Ende des Verbindungsabschnitts wird dann auf die Plane aufgelegt und dort vernäht, so dass eine um den Steg geführte Schlaufe gebildet ist, über die die Plane verliersicher an dem Planenroller gehalten ist.

Um eine gleichmäßige Aufspannung im geschlossenen Zustand und eine einfache Handhabbarkeit beim Verschieben der Plane in den geöffneten Zustand zu sichern, sind jeweils eine große Zahl von gleichartigen Planenrollern erforderlich, die in gleichmäßigen Abständen über die Länge des Trägers verteilt mit der Plane verkoppelt sind.

Der Träger, an dem die Plane zum Öffnen und Schließen des Laderaums in Längsrichtung des Nutzfahrzeugs verschiebbar gelagert ist, erstreckt sich üblicherweise längs einer der Längsseiten des Nutzfahrzeugs und ist an seinen Enden auf in den Eckbereichen der Ladefläche des Nutzfahrzeugs angeordneten säulenförmigen Stützen, den so genannten "Eckrungen", abgestützt.

Eine der wesentlichen Forderungen, die die Schiebelagerung von Planen und anderen Bauteilen an Trägern von Aufbauten der voranstehend erläuterten Art gestellt wird, ist, dass sie bei minimiertem Bauraumbedarf und minimierten Herstellkosten auch unter den in der Praxis auftretenden rauen Belastungen optimale Gebrauchseigenschaften besitzen. Dies betrifft insbesondere eine hohe Sicherheit gegen Verkanten der Rollen der Schiebelagerung an dem Träger und gegen eine Beschädigung der Gegenlagerflächen des Trägers oder der Rollen der Schiebelagerung durch harte, schlagende Kontakt zwischen den Mantelflächen der Rollen und den Gegenlagerflächen des Trägers. Solche harten Kontakte können aufgrund der dabei auftretenden Belastungskonzentrationen zu Materialverformungen und -ausbrüchen führen, die wiederum den gleichmäßigen, sicheren Lauf der Rollen an den Gegenlagerflächen beeinträchtigen können.

Es sind viele Versuche bekannt, diesen Anforderungen gerecht zu werden. Ein ebenfalls in der EP 2 759 432 A2 gezeigter Lösungsvorschlag besteht darin, an der Traglasche zusätzlich zu den das Gewicht der Plane in Schwerkraftrichtung aufnehmenden Rollen des Planenrollers eine zusätzliche Stützrolle zu lagern, die durch eine entsprechende Ausrichtung ihrer Drehachse so gelagert ist, dass sie mit ihrer Umfangsfläche an einer seitlichen Anlagefläche des Trägers abrollt, wenn die Plane an dem Träger längsverschoben wird. Auf diese Weise ist der Lauf des Planenrollers in der ihm zugeordneten Führung verbessert.

Neben diesem Stand der Technik ist aus der EP 2 371 595 B1 ein Planenroller bekannt, der mindestens ein Hauptlaufrad umfasst, das um eine horizontale Drehachse rotiert, und ein Stützrad. Das Hauptlaufrad wird dabei in einem Träger eines Nutzfahrzeugaufbaus in einer zugeordneten Spur und das Stützrad in einer zugeordneten Hilfsschiene geführt. Wirkt das Eigengewicht der Plane auf den Planenroller, so stellt sich im Hauptlaufrad eine aufwärts gerichtete Kraft und eine horizontal zur Umgebung gerichtete Kraft ein. Ebenso ergibt sich im Stützrad eine horizontal von der Umgebung weg gerichtete Kraft. Die Anbindung der Plane wird über einen einen Schlitz nach unten begrenzenden Steg bewerkstelligt, welcher ein Anschlagelement darstellt, das sich unterhalb der Drehachse des Hauptlaufrades befindet.

Aus der DE 10 2014 104 428 A1 ist des Weiteren ein Planenroller zum Verschieben einer Seitenplane für zollsichere Nutzfahrzeuge bekannt. Der Planenroller weist einen Profilkörper auf, der zwei Laufrollen und eine Stabilisierungsrolle umfasst. Die Laufrollen drehen um eine horizontale Achse und sind an der der Umgebung abgewandten Seite eines Vertikalschenkels befestigt. Die Stützrolle dreht dagegen um eine vertikale Achse und ist an der Oberseite eines Horizontalschenkels des Planenrollers gelagert, welcher sich oberhalb der Rollen befindet. Die Plane wird über ein Gurtband an einer Öse am Vertikalschenkel befestigt. Diese Öse befindet sich unterhalb der Drehachse der Rollen, jedoch wird zur zollsicheren Gestaltung des Aufbaus ein überlappender Teil der Plane anhand von Nieten am oberen Bereich des Vertikalschenkels fixiert und an ihrem Saum über Spannseile verspannt. Dieser überlappende Teil nimmt kein Gewicht auf, sondern dient nur der Abdeckung. Das Gewicht wird stattdessen durch einen unterhalb der horizontalen Drehachse der Rollen vorgesehenen Steg des Planenrollers getragen.

In der EP 2 902 228 A1 D4 ist ein weiterer diebstahlsicherer Planenroller beschrieben. Dieser Planenroller weist einen Profilkörper und zwei übereinander angeordnete Rollen mit senkrecht zueinander angeordneten Drehachsen auf, welche in einer Art Schiene in einem Träger geführt werden. Die untere der Rollen weist eine horizontale Drehachse auf. Sie ist unterhalb einer horizontalen Komponente des Profilkörpers angeordnet und mit der vertikalen Komponente des Profilkörpers verbunden. Die obere Rolle hat dagegen eine vertikale Drehachse und ist mit der horizontalen Komponente verbunden. Die Plane ist über Befestigungsmittel an der vertikalen Komponente des Profilkörpers auf Höhe und oberhalb der Drehachse der Rolle mit horizontaler Drehachse verbunden. Dabei ist das eine Befestigungsmittel unterhalb der horizontalen Drehachse der Rolle angeordnet mit der Folge, dass auch an dieser Stelle das Gewicht der Plane in den Planenroller eingeleitet wird.

Aus der DE 197 56 617 A1 ist zudem ein Planenroller für einen Aufbau für Nutzfahrzeuge bekannt, bei dem eine Durchgriffssicherung vorgesehen ist. Diese soll in Schließstellung der Plane Unbefugten einen Zugriff auf den Laderaum verhindern. Der Planenroller ist dabei durch eine der Umgebung des jeweiligen Planenaufbaus zugewandte Führungslasche realisiert. An der Führungslasche ist eine Rolle um eine Achse gelagert, die horizontal ausgerichtet ist. Die Führungslasche selbst besteht aus einem äußeren Teil und einem inneren Teil. Zwischen diesen Teilen ist die Plane fest gehalten, wobei Nietverbindungen am unteren, weit unterhalb der Achse der Rolle liegenden Rand der Lasche die Teile und den zwischen ihnen eingeklemmten Randabschnitt der Plane fixieren.

Aus der EP 2 540 598 A2 ist schließlich ein höhenverstellbarer Planenaufbau bekannt, bei dem die Seitenwand durch eine teleskopartige Runge stabilisiert wird, an welcher die Seitenplane fixiert ist. Die Runge ist an ihren oberen Enden über einen Schlitten verschiebbar in einem Holm des Planenaufbaus gelagert. Um in der unteren und oberen Fahrstellung des Aufbaus eine Überlappung der Plane mit der Dichtlippe sicherzustellen, weist die Runge an ihrer Außenseite einen Planenhalter auf. Dieser erstreckt sich über das obere Ende des Rungenkörpers hinaus nach oben und fixiert das obere Ende der Plane. Die Plane wird dabei mittels eines Montageelements an der Runge gehalten. Durch eine Niete oder desgleichen ist dieses Montageelement an der Runge fixiert. Die Niete ist dabei durch den oberen Rand der Plane geführt, so dass die aus dem Gewicht der Plane resultierende Kraft unterhalb seiner Rollen in den Schlitten eingeleitet wird.

Um die Dichtheit des Planenaufbaus auch im Bereich der am Träger ausgebildeten Längsführung zu garantieren, ist in der Regel an dem Träger eine Dichtung befestigt, die bei geschlossener Seitenplane mit einer Dichtlippe an der Außenseite eines oberen Randbereichs der Plane anliegt. Voraussetzung für die ordnungsgemäße Funktion der Dichtung ist, dass sich der betreffende Randbereich der Plane und die Dichtlippe über eine ausreichende Höhe überlappen. Gleichzeitig besteht aus optischen Gründen und unter Kostengesichtspunkten die Forderung nach minimierten Abmessungen der Dichtung. In der Praxis erweist sich eine Minimierung insbesondere der Höhe der Dichtlippe als schwierig, weil die Dichtlippe nicht nur die jeweils zum Lagern der Plane an dem Träger erforderlichen Planenroller, sondern auch den Anschlussbereich überdecken muss, in dem die Ankopplung der Plane an die Planenroller erfolgt. Die von diesem Anschlussbereich eingenommene Höhe wird wesentlich durch die effektive Länge der Verbindungsabschnitte bestimmt, über die die Plane an die Planenroller angeschlossen ist.
Vor dem Hintergrund des voranstehend dargelegten Standes der Technik hat sich die Aufgabe ergeben, einen Planenroller zu schaffen, mit dem es mit einfachen Mitteln möglich ist, die effektive Höhe, die für die Anbindung einer Seitenplane an die am jeweiligen Träger vorgesehene Längsführung benötigt wird, zu minimieren und bei dem gleichzeitig ein optimiertes Laufverhalten bei der Längsverschiebung der Plane an der Längsführung ermöglicht ist.
Ebenso sollte ein Nutzfahrzeugaufbau geschaffen werden, der sich kostengünstig herstellen lässt und dabei optimierte Gebrauchseigenschaften besitzt.
In Bezug auf den Planenroller hat die Erfindung diese Aufgabe dadurch gelöst, dass ein solcher Planenroller mindestens die in Anspruch 1 angegebenen Merkmale aufweist.
Ein die voranstehend genannte Aufgabe erfindungsgemäß lösender Planenaufbau ist durch mindestens die in Anspruch 11 angegebenen Merkmale gekennzeichnet.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Planenroller für eine verschiebbare Lagerung einer Seitenplane an einer Führung eines Planenaufbaus für ein Nutzfahrzeug weist demnach in Übereinstimmung mit dem eingangs erläuterten Stand der Technik mindestens eine im Gebrauch durch das Gewicht der Plane in Schwerkraftrichtung belastete Rolle, die an einer Achse um eine Drehachse drehbar gelagert ist, die bei in Gebrauchsstellung gehaltenem Planenroller quer zur Schwerkraftrichtung ausgerichtet ist, ein Anschlagelement zum Anschlagen der Plane an dem Planenroller und eine Traglasche auf, die die Rollen trägt, wobei das Anschlagelement bei in Gebrauchsstellung befindlichem Planenroller auf Höhe oder oberhalb der Drehachse der Rolle angeordnet ist.

Erfindungsgemäß ist nun das Anschlagelement durch einen von der Traglasche getragenen Steg gebildet.

Anders als beim Stand der Technik, bei dem die Plane regelmäßig an einem in Gebrauchsstellung unterhalb der Drehachse der Rolle angeordneten Abschnitt der Traglasche angeschlagen ist, erfolgt bei einem erfindungsgemäßen Planenroller somit die Ankopplung der Plane an den Planenroller in einem Bereich, der bei in Gebrauchsstellung befindlichem Planenroller mindestens auf Höhe, optimalerweise jedoch oberhalb der Drehachse der jeweils vorhandenen, das Gewicht der Plane in Schwerkraftrichtung aufnehmenden Rolle des Planenrollers angeordnet ist.

Die erfindungsgemäße Anordnung des Anschlagelements an dem Planenroller hat mehrere Vorteile. Zum einen wird dadurch, dass sich das Anschlagelement, über das die Ankopplung der Plane erfolgt, auf Höhe oder besser oberhalb der Drehachse der Rollen befindet, erreicht, dass sich der Verbindungsabschnitt der Plane, über den die Ankopplung an den Planenroller erfolgt, oder sogar der obere Randbereich der Plane und der Planenroller überlappen. Dementsprechend wird bei gleicher Länge des Verbindungsabschnitts die für die Ankopplung erforderliche effektive Höhe annähernd um den Längenabschnitt verkürzt, um den der Verbindungsabschnitt oder die Plane selbst den Planenroller überlappt. Die Höhe der zum Abdichten der Seitenplane im Bereich des Übergangs zum Träger erforderlichen Dichtlippe kann entsprechend reduziert und dennoch eine optimale Dichtheit garantieren.

Zum anderen ergibt sich durch die erfindungsgemäße Anordnung des Anschlagelements, dass der zum Befestigen der Plane mit dem Anschlagelement verkoppelte Verbindungsabschnitt an der der Umgebung des Nutzfahrzeugaufbaus zugeordneten Außenseite des Planenrollers entlang geführt ist. Dies wiederum hat zur Folge, dass durch das Eigengewicht der Plane ein zur Umgebung hin gerichtetes Moment auf den Planenroller ausgeübt wird, durch den der Planenroller sowohl bei geschlossener Plane als auch während der Längsverschiebung in einer definierten Anlagestellung an die ihm zugeordneten Führungsflächen des Trägers gehalten wird. Plötzliche Positionswechsel, die beim Stand der Technik noch die gefürchteten schlagenden oder ratternden Belastungen auslösen, werden so auf denkbar einfache Weise vermieden.

Bei einem erfindungsgemäßen Nutzfahrzeug mit einem Planenaufbau, der einen Laderaum umgrenzt und einen sich in Längsrichtung des Nutzfahrzeugs erstreckenden Träger umfasst, ist dementsprechend an dem betreffenden Träger eine Seitenplane mittels mindestens eines erfindungsgemäß ausgebildeten Planenrollers zwischen einer Schließstellung, in der die Seitenplane den Laderaum gegenüber der Umgebung abschließt, in eine Öffnungsstellung längsverschiebbar gelagert, in der eine seitliche Öffnung zum Beladen oder Entladen des Laderaums freigegeben ist.

Dabei erweist sich die Erfindung dann als besonders vorteilhaft, wenn der Träger des Planenaufbaus ein sich entlang des Trägers erstreckendes Dichtelement trägt, welches eine Dichtlippe umfasst, die bei in Schließstellung befindlicher Seitenplane in einem oberen Randbereich auf der vom Laderaum abgewandten Außenseite der Seitenplane aufliegt.

Sein störungsfreier Lauf in der zugeordneten Führung des jeweiligen Trägers lässt sich auch dadurch unterstützen, dass ein erfindungsgemäßer Planenroller zusätzlich zu der ersten Rolle mindestens eine weitere von der Traglasche getragene Rolle umfasst, die ebenfalls das Gewicht der Plane in Schwerkraftrichtung aufnimmt und beabstandet zu der ersten Rolle angeordnet sowie um eine Drehachse drehbar ist, die achsparallel zu der Drehachse der ersten Rolle ausgerichtet ist. Dabei ist das Anschlagelement dann erfindungsgemäß bei in Gebrauchsstellung befindlichem Planenroller auf Höhe oder oberhalb einer die Drehachsen der Rollen schneidenden Geraden angeordnet.

Aufgrund dessen, dass es bei einem erfindungsgemäßen Gebrauch in Folge der durch die erfindungsgemäße Anordnung des Anschlagelements bewirkten Lastbeaufschlagung selbsttätig zu einer definierten Ausrichtung kommt, kann es sich auch bei einem erfindungsgemäßen Planenroller als besonders zweckmäßig erweisen, wenn er eine Stützrolle umfasst, die um eine Drehachse drehbar gelagert ist, welche quer zur Drehachse der mindestens einen Rolle derart ausgerichtet ist, dass bei in Gebrauchsstellung ausgerichtetem Planenroller die Drehbewegung der Stützrolle in einer quer zur Schwerkraftrichtung ausgerichteten Ebene stattfindet. Bei einer Längsverschiebung rollt die erfindungsgemäß optional zusätzlich vorgesehene Stützrolle folglich wie beim Stand der Technik mit ihrer Umfangsfläche an einer zugeordneten Außenfläche des Trägers ab und stützt so den Planenroller zusätzlich seitlich am Träger ab. Die Plane wird so in einem definierten seitlichen Abstand zum Träger gehalten. Dabei hat die Erfindung den besonderen Vorteil, dass die Stützrolle in Folge der erfindungsgemäß erzwungenen Momentbeaufschlagung und damit einhergehenden Ausrichtung des Planenrollers selbsttätig in dauernder Anlage an der betreffenden Außenfläche des Trägers gehalten wird.

Eine stabile und gleichzeitig kostengünstig herstellbare Ausgestaltung der Erfindung ergibt sich dadurch, dass der Planenroller in an sich bekannter Weise eine Traglasche umfasst, der die mindestens eine, im Gebrauch die Last der Plane in Schwerkraftrichtung aufnehmende Rolle trägt.

Eine besonders einfache Möglichkeit der Fertigung eines erfindungsgemäßen Planenrollers ergibt sich bei Verwendung einer solchen Traglasche dadurch, dass das Anschlagelement durch einen von der Traglasche getragenen Steg gebildet ist. An einen solchen Steg lässt sich, wie aus dem Stand der Technik grundsätzlich bekannt, die Plane mittels an ihr vorgesehener, streifen- oder riemenförmiger Verbindungsabschnitte besonders einfach befestigen. Dabei ergeben sich optimale Gebrauchseigenschaften des Planenrollers, wenn der Steg in einem in Gebrauchsstellung oberen Randbereich der Traglasche ausgebildet ist. Um das Einfädeln des jeweiligen Verbindungsabschnitts zu erleichtern, kann es zweckmäßig sein, den Steg zwischen dem in Gebrauchsstellung oberen Rand der Traglasche und einem in die Traglasche eingeformten Fenster auszubilden.

Letzteres erweist sich insbesondere dann als zweckmäßig, wenn die Traglasche des erfindungsgemäßen Stahlflachprodukts aus einem Metallblech besteht, in das ein entsprechendes Fenster auf besonders einfache Weise, beispielsweise durch eine Stanzoperation, eingebracht werden kann.

Im Fall, dass beim erfindungsgemäßen Planenroller eine Stützrolle und eine Traglasche vorgesehen sind, ergibt sich eine einfache Lagerung der Stützrolle an dem Planenroller dabei dann, wenn die Traglasche in an sich bekannter Weise einen Hauptabschnitt und einen vom Hauptabschnitt abstehenden Stützabschnitt aufweist, an dem die Stützrolle drehbar gelagert ist.

Das erfindungsgemäß vorgesehene, beispielsweise als Steg ausgebildete Anschlagelement kann als separates Bauelement vorgefertigt und mit dem Planenroller verbunden werden. Dazu kann das Anschlagelement an einer Verlängerung der zur Lagerung der jeweils vorgesehenen Rolle vorhandenen Achse oder Achsen ausgebildet sein. So ist es beispielsweise möglich, bei zwei die Last der Plane in Schwerkraftrichtung aufnehmenden Rollen die Achsen der Rollen mit einem Bügel zu verbinden. Dieser Bügel kann dabei so geformt werden, dass er in Gebrauchsstellung auf Höhe oder oberhalb der die Drehachsen der Rollen verbindenden gedachten Gerade einen Stegabschnitt aufweist, an dem die Plane befestigt ist.

Sofern eine Traglasche vorgesehen ist, kann ein solcher Bügel selbstverständlich auch an der Traglasche befestigt werden.

Alternativ ist es bei Verwendung einer Traglasche jedoch auch möglich, den Steg einstückig als Abschnitt der Traglasche zu bilden, indem, wie bereits erwähnt, ein insbesondere schlitzartiges Fenster in die Traglasche eingeformt wird, so dass zwischen der in Gebrauchsstellung oberen Kante des Fensters und der oberen Kante der Traglasche der Steg verbleibt, der das Anschlagelement bildet.

Eine besonders platzsparende und gleichzeitig funktionelle Ausgestaltung eines erfindungsgemäßen Planenrollers ergibt sich dann, wenn die mindestens eine Rolle und die Stützrolle auf derselben Seite der Traglasche angeordnet sind.

Das erfindungsgemäß bewirkte selbsttätige Ausrichten des Planenrollers unter der Last der von ihm getragenen Plane kann noch dadurch unterstützt werden, dass an dem Planenroller ein Umlenkelement vorgesehen ist. Dieses Umlenkelement kann, sofern ein solches vorhanden ist, an der Traglasche ausgebildet sein, um einen Verbindungsabschnitt der Plane umzulenken, über den die Anbindung der Plane an das Anschlagelement des Planenrollers erfolgt. Durch die Umlenkung kann das die sichere Ausrichtung des Planenrollers gewährleistende Moment weiter vergrößert werden. Hierzu ist das Umlenkelement zweckmäßigerweise in einem Bereich der Traglasche ausgebildet, der in Gebrauchsstellung des Planenrollers unterhalb der Drehachse der mindestens einen Rolle angeordnet ist. Auch das Umlenkelement kann ein in die Traglasche eingeformter Steg sein.

Nachfolgend wird die Erfindung anhand einer Ausführungsbeispiele zeigenden Zeichnung näher erläutert. Deren Figuren zeigen jeweils schematisch:
- Fig. 1: einen Planenroller in seitlicher Ansicht;
- Fig. 2: den Planenroller in einem Schnitt entlang der in Fig. 1 eingezeichneten Schnittlinie X-X;
- Fig. 3: einen Ausschnitt des oberen Rands einer Seitenplane eines Nutzfahrzeugaufbaus in seitlicher Ansicht;
- Fig. 4: den Planenroller gemäß Fig. 1 in einem ersten Arbeitsschritt beim Ankoppeln der Seitenplane;
- Fig. 5: den Planenroller gemäß Fig. 2 in einem zweiten Arbeitsschritt beim Ankoppeln der Seitenplane;
- Fig. 6: einen Träger mit daran geführtem Planenroller und Seitenplane in einem Schnitt quer zur Längserstreckung des Trägers entsprechend der Schnittdarstellung in Fig. 2;
- Fig. 7: eine erste alternative Ausgestaltung eines Planenrollers mit daran befestigter Seitenplane in einer der Fig. 6 entsprechenden Schnittdarstellung;
- Fig. 8: einen Ausschnitt der ersten alternativen Ausgestaltung gemäß Fig. 7 in einer längsgeschnittenen Draufsicht;
- Fig. 9: eine zweite alternative Ausgestaltung eines Planenrollers mit daran befestigter Seitenplane in einer der Fig. 8 entsprechenden Schnittdarstellung;
- Fig. 10: ein Nutzfahrzeug mit einem Planenaufbau in einer perspektivischen Ansicht.

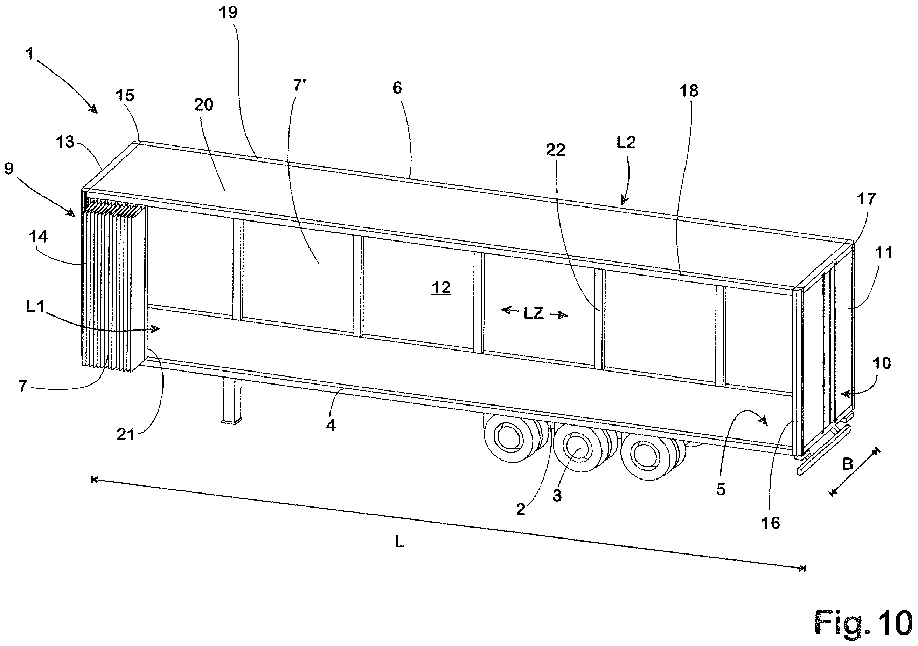

Bei dem in Fig. 10 gezeigten Nutzfahrzeug 1 handelt es sich um einen Sattelauflieger für einen Sattelzug, dessen Zugmaschine hier der Übersichtlichkeit halber nicht dargestellt ist.

Das Nutzfahrzeug 1 umfasst ein Chassis 2, an dem drei Radachsen 3 gelagert sind und das einen Boden 4 trägt, an dessen freier Oberseite eine sich über die Länge L und Breite B des Nutzfahrzeugs 1 erstreckende Ladefläche 5 ausgebildet ist.

Über der Ladefläche 5 ist ein quaderförmiger Planenaufbau 6 errichtet, dessen den Längsseiten des Nutzfahrzeugs 1 zugeordneten Seitenwände L1,L2 durch Planen 7,7' gebildet sind.

Die der nicht gezeigten Zugmaschine zugeordnete geschlossene feste stirnseitige Seitenwand 9 ist dagegen in an sich bekannter Weise aus Leichtmetallbauteilen gebildet. An der rückwärtigen Seitenwand 10 ist in ebenso bekannter Weise eine doppelflügelige Tür 11 vorgesehen, über die eine Beladung des von dem Nutzfahrzeugaufbau 6 umgrenzten Laderaums 12 erfolgen kann.

Der Nutzfahrzeugaufbau 6 umfasst des Weiteren in an sich bekannter Weise einen Rahmen 13, der aus Eckrungen 14,15,16,17 gebildet ist, von denen jeweils eine in einem der vier Eckbereiche des Bodens 4 errichtet ist. Die beiden vorderen Eckrungen 14,15 begrenzen die stirnseitige Seitenwand 9, wogegen die rückwärtige Seitenwand 10 von den beiden hinteren Eckrungen 16,17 begrenzt ist.

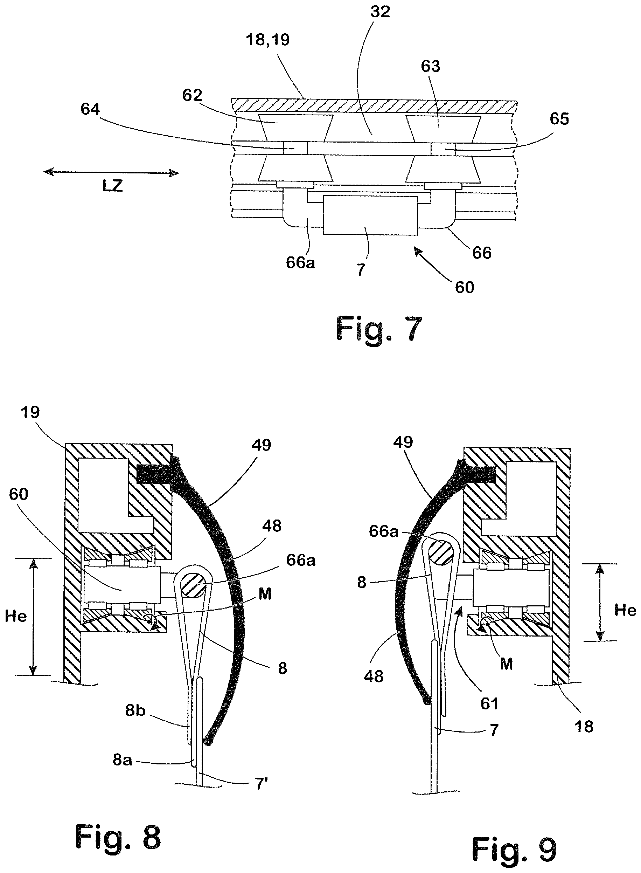

Die Eckrungen 14,16 und die Eckrungen 15,17 tragen jeweils gemeinsam einen Träger 18,19, der sich zwischen der stirnseitigen Seitenwand 9 und der rückseitigen Seitenwand 10 erstreckt. Die Träger 18,19 tragen ein den Laderaum 12 an seiner oberen Seite abdeckendes Dach 20, das hier ebenfalls aus einem Planenwerkstoff besteht. Gleichzeitig bilden die Träger 18,19 in an sich bekannter Weise eine Führung für die Planen 7,7', die die jeweiligen Seitenwände L1,L2 bilden. Entlang der Träger 18,19 können die Planen 7,7' aus einer Stellung, in der die jeweilige Seitenwand L1,L2 vollständig geschlossen ist (in Fig. 9 dargestellt für die Plane 7 der Seitenwand L2), in Längsrichtung LZ in eine Öffnungsstellung bewegt werden, in der die jeweilige Seitenwand L1,L2 geöffnet ist und am Nutzfahrzeugaufbau 6 eine Öffnung zum Beladen des Laderaums 12 vorhanden ist (in Fig. 9 dargestellt für die Plane 7 der Seitenwand L1).

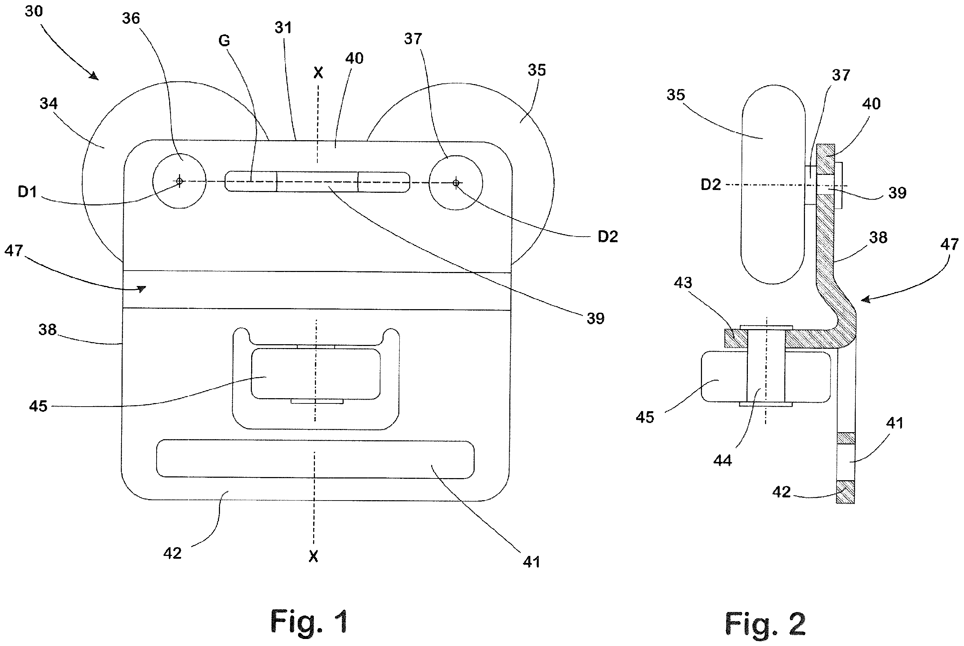

Ebenfalls an den Trägern 18,19 in Längsrichtung LZ verschiebbar gelagert sind Schieberungen 21,22, die aus einer Gebrauchsstellung, in der sie in regelmäßigen Abständen über die Länge L der jeweiligen Seitenwand L1,L2 verteilt angeordnet sind (in Fig. 1 dargestellt für die Schieberungen 22 der Seitenwand L1), in eine Öffnungsstellung geschoben werden können, um die Öffnung zum Beladen des Laderaums 12 frei zu machen (in Fig. 1 dargestellt für die Schieberungen 22 der Seitenwand L2). Die Schieberungen 21,22 erstrecken sich zwischen dem jeweiligen Träger 18,19 und dem Boden 4 und sind bei geschlossener Plane 7,7' in gleichmäßigen Abständen über die Länge L verteilt an der jeweiligen Seitenwand L1,L2 angeordnet. Sie dienen zur Aussteifung des Aufbaus 6 und stützen den ihnen jeweils zugeordneten Träger 18,19.

Für die längsverschiebbare Lagerung der jeweiligen Seitenplane 7,7' sind eine große Zahl von gleichartigen Planenrollern 30 vorgesehen, die in gleichmäßigen Abständen über die Länge der Seitenplanen 7,7' verteilt mit dem oberen Rand 31 der jeweiligen Seitenplane 7,7' verbunden und in einer an dem jeweiligen Träger 7,7' ausgebildeten Längsführung 32 längsverschiebbar gelagert sind.

Die sich über die Länge L des Aufbaus 6 erstreckende Längsführung 32 ist in an sich bekannter Weise als zur der Umgebung U des Nutzfahrzeugaufbaus 6 zugeordneten Außenseite A des jeweiligen Trägers 18,19 seitlich geöffnete Führungsnut ausgebildet, in deren Grund eine Rille 33 eingeformt ist, in der die jeweils zwei Rollen 34,35 der Planenroller 30 abrollen.

Die Rollen 34,35 der Planenroller 30 nehmen die in Schwerkraftrichtung S in Folge des Eigengewichts der Plane 7,7' wirkende Last auf und sind drehbar an bolzenförmigen Achsen 36,37 gelagert, die Drehachsen D1,D2 der Rollen 34,35 definieren. Die Achsen 36,37 sind an einer als Blechstanzteil gefertigten Traglasche 38 mit Abstand zueinander befestigt. Dabei stehen die Achsen 36,37 im Wesentlichen rechtwinklig von der dem jeweiligen Träger 18,19 zugeordneten Seitenfläche der Traglasche 38 ab. Die Drehachsen D1,D2 der Rollen 34,35 sind miteinander über eine gedachte Gerade G verbunden.

In den in Schwerkraftrichtung S gesehen oberhalb der gedachten Geraden G angeordneten oberen Abschnitt der Traglasche 38 ist ein fensterartiger Schlitz 39 eingeformt, der mittig zwischen den Drehachsen D1, D2 angeordnet ist. Die Breite des Schlitzes 39 ist so bemessen, dass ein riemenartiger Verbindungsabschnitt 8 mit Spiel in den Schlitz 39 eingeführt werden kann. Auf diese Weise ist bei in Gebrauchsstellung (Figuren 1, 5, 6) befindlichem Planenroller 30 zwischen dem oberen Rand des Schlitzes 39 und dem oberen Rand der Traglasche 38 ein Steg 40 gebildet, der als Anschlagelement für die Befestigung der jeweiligen Plane 7,7' an dem Planenroller 30 dient.

Nahe dem in Gebrauchsstellung des Planenrollers 30 unteren Rand der Traglasche 38 ist in die Traglasche 38 ein weiterer parallel zum ersten Schlitz 39 ausgerichteter und wie dieser bemessene Schlitz 41 in die Traglasche 38 eingeformt. Dadurch ist zwischen dem in Gebrauchsstellung des Planenrollers 30 unteren Rand der Traglasche 38 und dem unteren Rand des Schlitzes 41 ein weiterer Steg 42 gebildet. Dieser Steg 42 dient bei der Befestigung der jeweiligen Plane 7,7' an dem Planenroller 30 zum Umlenken des Verbindungsabschnitts 8, mit dem die jeweilige Plane 7,7' an dem Planenroller 30 befestigt ist.

Zusätzlich ist im zentralen Hauptabschnitt der Traglasche 38 durch eine Stanz- und Biegeoperation ein fensterartiger Ausschnitt eingeschnitten und ein Stützabschnitt 43 geformt worden. Der Stützabschnitt 43 steht auf der Seite der Traglasche 38 hervor, an der die Rollen 34,35 angeordnet sind und ist dabei wie die Achsen 36,37 im Wesentlichen rechtwinklig zur dem jeweiligen Träger 18,19 zugeordneten Seitenfläche der Traglasche 38 ausgerichtet. An seiner von den Rollen 34,35 abgewandten Unterseite hängt eine zentral an dem Stützabschnitt 43 angeordnete Achse 44, die quer zu den Drehachsen D1, D2 der Rollen 34,35 sowie parallel zur zugeordneten Seitenfläche der Traglasche 38 ausgerichtet ist. Auf der Achse 44 ist eine Stützrolle 45 frei drehbar gelagert, die im Gebrauch an einer zugeordneten Seitenfläche 46 des jeweiligen Trägers 18,19 anliegt und bei einer Verschiebung des Planenrollers 30 an dieser Seitenfläche 46 abrollt.

Der zur Befestigung der jeweiligen Plane 7,7' an dem Planenroller 30 vorgesehene Verbindungsabschnitt 8 ist als Abschnitt eines textilen Riemens separat vorgefertigt und flach aufliegend mit seinem einen Endabschnitt 8a derart an die dem Laderaum 12 des Planenaufbaus 6 zugeordneten Rückseite 7a des oberen Randbereichs 7b der Plane 7,7' angenäht, dass er rechtwinklig ausgerichtet über den oberen Rand der Plane 7,7' hinaussteht.

Zum Ankoppeln des Verbindungsabschnitts 8 an den Planenroller 30 wird die jeweilige Plane 7,7' so ausgelegt, dass die Plane 7,7' auf ihrer im Gebrauch der Umgebung U zugeordneten Seite liegt, der mit dem Randbereich 7b der Plane 7,7' vernähte Endabschnitt 8a des Verbindungsabschnitts 8 also frei sichtbar ist. Der mit der Plane 7,7' zu verbindende Planenroller 30 wird dann so ausgerichtet, dass sein Schlitz 39 in Richtung der Plane 7,7' ausgerichtet ist und die von den Rollen 34,35 abgewandte Seite seiner Traglasche 38 frei sichtbar ist.

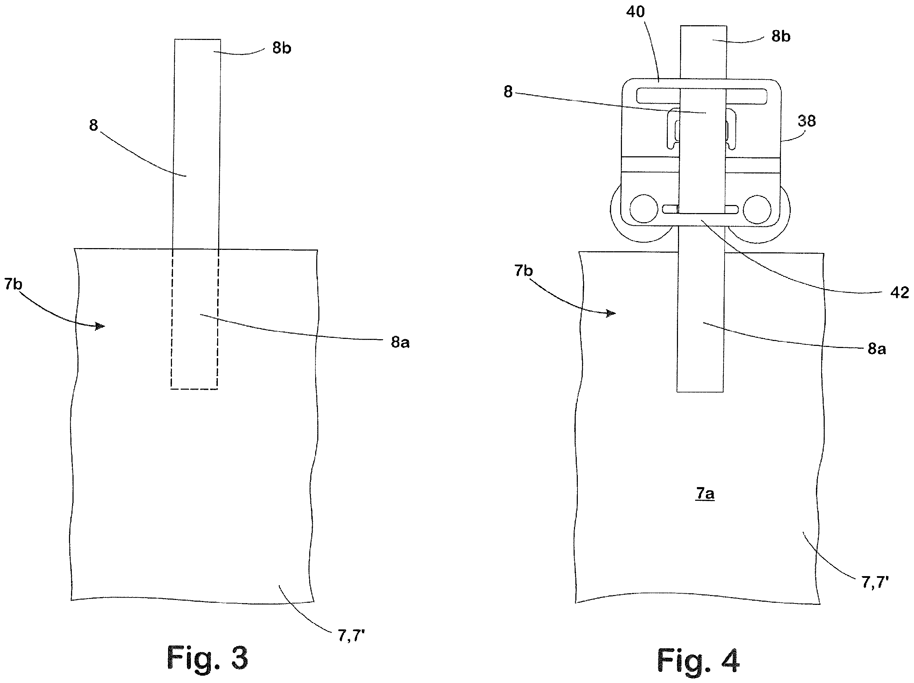

Anschließend wird zunächst das freie Ende 8b des Verbindungsabschnitts 8 von der den Rollen 34,35 zugeordneten Seite der Traglasche 38 her durch den oberen Schlitz 39 gefädelt. Dann wird der freie Endabschnitt 8b des Verbindungsabschnitts 8 von der von den Rollen 34,35 abgewandten Seite der Traglasche 38 her durch den zweiten Schlitz 41 gefädelt und dabei so ausgerichtet, dass der Verbindungsabschnitt 8 flach auf der von den Rollen 34,35 abgewandten Seite der Traglasche 38 aufliegt (Fig. 4).

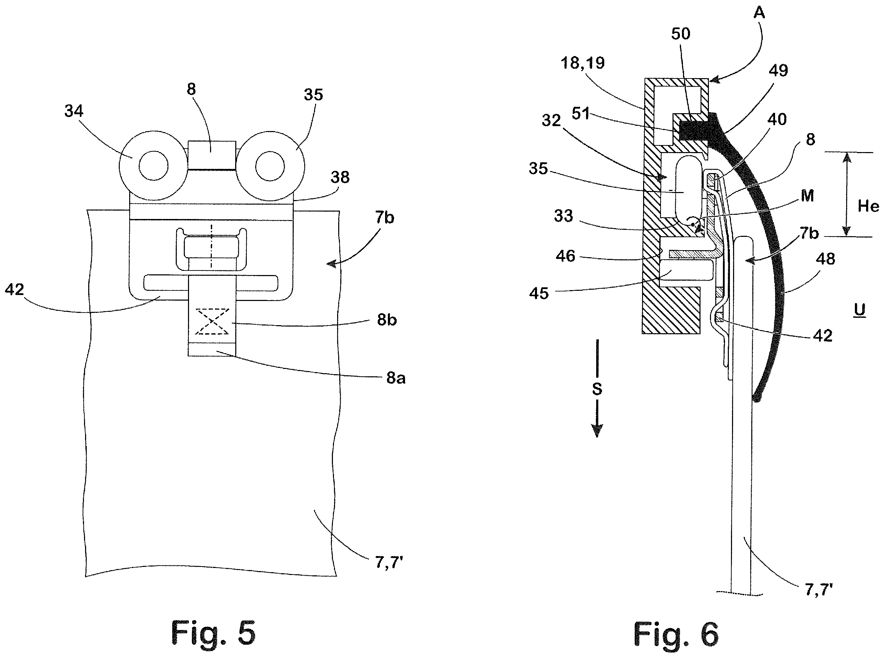

Nun wird der Planenroller 30 um den in Gebrauchsstellung oberen Steg 40 herum umgeschlagen, so dass der flach an der Traglasche 38 anliegende Abschnitt des Verbindungsabschnitts 8 zur flachen Anlage auf dessen von der Plane 7,7' abgehenden Abschnitt aufliegt, der Steg 40 von einer durch den Verbindungsabschnitt 8 gebildeten Schlaufe umschlungen ist und der frei aus dem in Gebrauchsstellung unteren Schlitz 41 herausstehende Endabschnitt 8b des Verbindungsabschnitts 8 unter Abdeckung des in Gebrauchsstellung unteren Stegs 42 auf den bereits mit der Plane 7,7' vernähten Endabschnitt 8a gelegt werden kann. Abschließend wird der am Steg 41 derart umgelenkte Endabschnitt 8b ebenfalls mit der Plane 7,7' vernäht, so dass auch der (Umlenk-)Steg zwischen den aufeinander liegenden Abschnitten des Verbindungsabschnitts 8a eingefasst und der Planenroller 30 fest an der jeweiligen Plane 7,7' gehalten ist (Fig. 5).

Dabei überdeckt die Plane 7,7' mit ihrem oberen Randbereich 7b einen wesentlichen Teil der Höhe der Traglasche 38. Gleichzeitig bewirkt das in Schwerkraftrichtung S wirksame und von den Rollen 34,35 aufgenommene Gewicht der Plane 7,7' dadurch, dass der als Anschlagelement dienende Steg 40 außermittig in Bezug auf die Rollen 34,35 und oberhalb von deren Drehachsen D1,D2 angeordnet ist, ein Drehmoment M, dessen Drehachse im Bereich des Aufstandspunkt der Rollen 34,35 in der Rille 33 liegt und durch das der Planenroller 30 mit seinem in Gebrauchsstellung unteren Bereich und insbesondere seiner Stützrolle 45 in Richtung des jeweiligen Trägers 18,19 bewegt wird. Auf diese Weise ist ein dauerhaft sicherer Kontakt der Stützrolle 45 mit der ihr zugeordneten Seitenfläche 46 des Trägers 18,19 gesichert.

Verstärkt werden kann das Moment M noch dadurch, dass in die Traglasche 38 eine Abkantung 47 eingebracht wird, die derart ausgerichtet ist, dass der untere, den als Umlenkelement wirkenden Steg 42 tragende Abschnitt der Traglasche 38 in Gebrauchsstellung des Planenrollers 30 zur Umgebung hin gerichtet gegenüber dem oberen, die Rollen 34,35 und den Steg 40 tragenden Abschnitt der Traglasche 38 vorsteht.

Gleichzeitig ist durch die erfindungsgemäß ermöglichte Überdeckung des Verbindungsabschnitts 8 sowie gegebenenfalls auch des oberen Randbereichs 7b der jeweiligen Plane 7,7' mit der Traglasche 38 die für die Anbindung der Plane 7,7' an den Planenroller 30 benötigte effektive Höhe He minimiert. Die "effektive Höhe He" bezeichnet dabei den im Gebrauchszustand zwischen der Oberkante des seitlichen Öffnungsschlitzes der Führung 32 und der Oberkante der Plane 7,7' in vertikaler Richtung vorhandenen Abstand. Auf diese Weise ist auch die Höhe des Überdeckungsbereichs minimiert, über den sich eine Dichtlippe 48 einer von dem jeweiligen Träger 18,19 getragenen Dichtung 49 erstrecken muss, um eine sichere Abdichtung des Bereichs gegenüber der Umgebung U zu gewährleisten, in dem die die Plane 7,7' tragenden Planenroller 30 längs des jeweiligen Trägers 18,19 verschoben werden, wenn die Plane 7,7' zwischen ihrer geschlossenen und geöffneten Stellung hin und her bewegt wird.

Für ihre Befestigung weist die konventionell ausgebildete, aus einem Gummimaterial oder desgleichen gefertigte Dichtung 49 eine einstückig an ihr ausgebildete Befestigungsleiste 50 auf, die form- und kraftschlüssig in einer oberhalb der Längsführung 32 am jeweiligen Träger 18,19 ausgebildeten Nutaufnahme 51 sitzt. Die Dichtlippe 48 der Dichtung 49 liegt dann elastisch nachgiebig an der der Umgebung U zugeordneten Außenseite des oberen Randbereichs 7b der Plane 7,7' auf.

Bei den in den Figuren 7,8 und 9 gezeigten Ausführungsbeispielen umfasst der jeweilige Planenroller 60,61 zwei Rollenlagerpaare 62,63, deren zugeordnete Achsen 64,65 mit Abstand zueinander angeordnet sind und über den jeweiligen Träger 18,19 seitlich hinausstehenden, U-förmigen Bügel 66 miteinander schiebefest verkoppelt sind, der eine Verlängerung der Achsen 64,65 bildet.

Bei dieser Ausgestaltung hängt die Plane 7,7' an dem frei gegenüber den Rollenpaaren 62,63 auskragenden und als Anschlagelement für den Verbindungsabschnitt 8 dienenden Bügelsteg 66a des Bügels 66. Dazu ist der jeweilige Verbindungsabschnitt 8 unter Ausbildung einer Schlaufe um den Bügel 66 geschlungen und mit seinem freien Ende 8b wiederum mit dem oberen Randbereich 7b der Plane 7,7' vernäht. Durch die auskragende Anordnung des Bügels 66 ergibt sich auch hier ein Moment M, durch das die Rollenlagerpaare 62,63 der Planenroller 60,61 in einer definierten Ausrichtung an den ihnen zugeordneten Gegenlagerflächen der Längsführung 32 gehalten sind. Dabei ist aufgrund dessen, dass die Anbindung der Plane 7,7' an den jeweiligen Planenroller 60,61 mindestens auf Höhe der Drehachsen D1, D2 der Rollenlagerpaare 62,63 (Fig. 7,8) bzw. oberhalb der die Drehachsen D1,D2 verbindenden gedachten Geraden G erfolgt (Fig. 9), die für die Anbindung der Plane 7,7' an den jeweiligen Planenroller 60,61 benötigte effektive Höhe He optimal gering.

Wie anhand von Fig. 9 ersichtlich, kann diese Höhe He noch dadurch verkürzt werden, dass der Bügel 66 in Richtung des in Gebrauchsstellung oberen Rands des jeweiligen Trägers 18,19 gekröpft ausgebildet ist, so dass sein Bügelsteg 66a deutlich oberhalb der Geraden G liegt.

### BEZUGSZEICHEN

- 1: Nutzfahrzeug
- 2: Chassis
- 3: Radachsen
- 4: Boden
- 5: Ladefläche
- 6: Planenaufbau
- 7,7': (Seiten-)Planen des Planenaufbaus 6
- 7a: Rückseite der jeweiligen Plane 7,7'
- 7b: oberer Randbereich der jeweiligen Plane 7,7'
- 8: Verbindungsabschnitt
- 8a: mit dem oberen Randbereich 7b vernähter erster Endabschnitt des Verbindungsabschnitts 8
- 8b: zweiter Endabschnitt des Verbindungsabschnitts 8
- 9: stirnseitige Seitenwand des Planenaufbaus 6
- 10: rückwärtige Seitenwand 10 des Planenaufbaus 6
- 11: Tür des Planenaufbaus 6
- 12: Laderaum des Planenaufbaus 6
- 13: Rahmen des Planenaufbaus 6
- 14-17: Eckrungen des Planenaufbaus 6
- 18,19: Träger des Planenaufbaus 6
- 20: Dach des Planenaufbaus 6
- 21,22: Schieberungen
- 30: Planenroller
- 31: oberer Rand
- 32: Längsführung des jeweiligen Trägers 18,19
- 33: Rille
- 34,35: Rollen
- 36,37: Achsen
- 38: Traglasche
- 39: Schlitz
- 40: Steg (Anschlagelement)
- 41: Schlitz
- 42: Steg (Umlenkelement)
- 43: Stützabschnitt
- 44: Achse
- 45: Stützrolle
- 46: Seitenfläche
- 47: Abkantung der Traglasche 38
- 48: Dichtlippe
- 49: Dichtung
- 50: Befestigungsleiste
- 51: Nutaufnahme
- 60,61: Planenroller
- 62,63: Rollenlagerpaare
- 64,65: Achsen der Rollenlagerpaare 62,63
- 66: Bügel
- 66a: Bügelsteg (Anschlagelement) des Bügels 66

- A: Außenseite des jeweiligen Trägers 18, 19
- B: Breite des Nutzfahrzeugs 1
- D1,D2: Drehachsen der Rollen 34,35
- G: gedachte Gerade
- He: für die Anbindung der Plane 7,7' an den Planenroller 30 benötigte effektive Höhe
- L: Länge des Nutzfahrzeugs 1
- L1,L2: Seitenwände des Planenaufbaus
- LZ: Längsrichtung
- M: Moment
- S: Schwerkraftrichtung
- U: Umgebung

## Patentansprüche

1. Planenroller für eine verschiebbare Lagerung einer Seitenplane (7,7') an einer Führung (32) eines Planenaufbaus (6) für ein Nutzfahrzeug (1),
- mit mindestens einer im Gebrauch durch das Gewicht der Plane (7,7') in Schwerkraftrichtung (S) belasteten Rolle (34,35;62,63), die an einer Achse (36,37;64,65) um eine Drehachse (D1,D2) drehbar gelagert ist, die bei in Gebrauchsstellung gehaltenem Planenroller (30,60,61) quer zur Schwerkraftrichtung (S) ausgerichtet ist,
- mit einem Anschlagelement (40,66a) zum Anschlagen der Plane (7,7') an dem Planenroller (30,60,61),
und
- mit einer Traglasche (38), die die Rollen (34,35) trägt,
- wobei das Anschlagelement (40,66a) bei in Gebrauchsstellung befindlichem Planenroller (30,60,61) auf Höhe oder oberhalb der Drehachse (D1, D2) der Rolle (34,35;62,63) angeordnet ist.
**dadurch gekennzeichnet, dass**
das Anschlagelement durch einen von der Traglasche (38) getragenen Steg (40) gebildet ist.

2. Planenroller nach Anspruch 1, **dadurch gekennzeichnet, dass** er zusätzlich zu der einen Rolle (34;62) mindestens eine weitere Rolle (35;63) umfasst, die beabstandet zu der ersten Rolle (34;62) angeordnet und um eine Drehachse (D2) drehbar ist, die achsparallel zu der Drehachse (D1) der ersten Rolle (34;62) ausgerichtet ist und **dass** das Anschlagelement (40,66a) bei in Gebrauchsstellung befindlichem Planenroller (30,60,61) auf Höhe oder oberhalb einer die Drehachsen (D1, D2) der Rollen (34,35;62,63) schneidenden Geraden (G) angeordnet ist.

3. Planenroller nach einem der voranstehenden Ansprüche, **dadurch gekennzeichnet, dass** er eine Stützrolle (45) umfasst, die um eine Drehachse drehbar gelagert ist, welche quer zur Drehachse (D1, D2) der mindestens einen Rolle (34,35;62,63) derart ausgerichtet ist, dass bei in Gebrauchsstellung ausgerichtetem Planenroller (30,60,61) die Drehbewegung der Stützrolle (45) in einer quer zur Schwerkraftrichtung (S) ausgerichteten Ebene stattfindet.

4. Planenroller nach einem der voranstehenden Ansprüche, **dadurch gekennzeichnet, dass** der Steg (40) zwischen dem in Gebrauchsstellung oberen Rand (31) der Traglasche (38) und einem in die Traglasche (38) eingeformten Fenster ausgebildet ist.

5. Planenroller nach Anspruch 3, **dadurch gekennzeichnet, dass** die Traglasche (38) einen Hauptabschnitt und einen vom Hauptabschnitt abstehenden Stützabschnitt (43) aufweist, an dem die Stützrolle (45) drehbar gelagert ist.

6. Planenroller nach einem der voranstehenden Ansprüche 3 oder 5, **dadurch gekennzeichnet, dass** die mindestens eine Rolle (34,35;62,63) und die Stützrolle (45) auf derselben Seite der Traglasche (38) angeordnet sind.

7. Planenroller nach einem der voranstehenden Ansprüche, **dadurch gekennzeichnet, dass** er ein Umlenkelement (42) zum Umlenken eines Verbindungsabschnitts (8a) der Plane (7,7') aufweist, über den die Anbindung der Plane (7,7') an das Anschlagelement (40,66a) des Planenrollers (30,60,61) erfolgt.

8. Planenroller nach Anspruch 7, **dadurch gekennzeichnet, dass** das Umlenkelement (42) in einem Bereich der Traglasche (38) ausgebildet ist, der in Gebrauchsstellung des Planenrollers (30,60,61) unterhalb der Drehachse (D1,D2) der mindestens einen Rolle (34,35;62,63) angeordnet ist.

9. Planenroller nach Anspruch 7 oder 8, **dadurchgekennzeichnet, dass** das Umlenkelement ein an der Traglasche (38) ausgebildeter Steg (42) ist.

10. Planenroller nach einem der voranstehenden Ansprüche, **dadurch gekennzeichnet, dass** das Anschlagelement (66a) an einer Verlängerung (66) der mindestens einen Achse (64,65) ausgebildet ist, an der die mindestens eine Rolle (62,63) gelagert ist.

11. Nutzfahrzeug mit einem Planenaufbau (6), der einen Laderaum (12) umgrenzt und einen sich in Längsrichtung (LZ) des Nutzfahrzeugs (1) erstreckenden Träger (18,19) umfasst, an dem eine Seitenplane (7,7') mittels mindestens eines gemäß einem der Ansprüche 1 bis 10 ausgebildetem Planenrollers (30,60,61) zwischen einer Schließstellung, in der die Seitenplane (7,7') den Laderaum (12) gegenüber der Umgebung (U) abschließt, in eine Öffnungsstellung längsverschiebbar gelagert ist, in der eine seitliche Öffnung zum Beladen oder Entladen des Laderaums (12) freigegeben ist.

12. Nutzfahrzeug nach Anspruch 11,**dadurch gekennzeichnet, dass** der Träger (18,19) ein sich entlang des Trägers (18,19) erstreckendes Dichtelement (49) trägt, welches eine Dichtlippe (48) umfasst, die bei in Schließstellung befindlicher Seitenplane (7,7') in einem oberen Randbereich (7b) auf der vom Laderaum (12) abgewandten Außenseite der Seitenplane (7,7') aufliegt.

## Claims

1. Canvas roller device for mounting a side canvas curtain (7, 7') such that it is moveable on a guide (32) of a canvas cover (6) for a commercial vehicle (1),
- having at least one roller (34, 35; 62, 63) which in use is loaded in the direction of gravity (S) by the weight of the canvas curtain (7, 7') and which is pivot-mounted on an axis (36, 37; 64, 65) about a rotational axis (D1, D2) which is aligned transverse to the direction of gravity (S) when the canvas roller device (30, 60, 61) is held in the usage position,
- having a fastening element (40, 66a) for fastening the canvas curtain (7, 7') on the canvas roller device (30, 60, 61),
and
- having a support bracket (38) which supports the rollers (34, 35),
- wherein the fastening element (40, 66a) is arranged at the height of or above the rotational axis (D1, D2) of the roller (34, 35; 62, 63) when the canvas roller device (30, 60, 61) is in the usage position,
**characterised in that**
the fastening element is formed by a web (40) supported by the support bracket (38).

2. Canvas roller device according to Claim 1, **characterised in that** in addition to the one roller (34; 62) it comprises at least one further roller (35; 63) which is arranged spaced apart from the first roller (34; 62) and is rotatable about a rotational axis (D2) which is aligned axially parallel to the rotational axis (D1) of the first roller (34; 62), and **in that** the fastening element (40; 66a) is arranged at the height of or above a straight line (G) cutting the rotational axes (D1, D2) of the rollers (34, 35; 62, 63) when the canvas roller device (30, 60, 61) is in the usage position.

3. Canvas roller device according to any one of the preceding claims, **characterised in that** it comprises a support roller (45) which is pivot-mounted about a rotational axis which is aligned transverse to the rotational axis (D1, D2) of the at least one roller (34, 35; 62, 63) in such a way that when the canvas roller device (30, 60, 61) is aligned in the usage position the rotational movement of the support roller (45) occurs in a plane which is aligned transverse to the direction of gravity (S).

4. Canvas roller device according to any one of the preceding claims, **characterised in that** the web (40) is formed between the upper edge (31) of the support bracket (38) in the usage position and a window formed into the support bracket (38).

5. Canvas roller device according to Claim 3, **characterised in that** the support bracket (38) has a main section and a support section (43) which sticks out from the main section and on which the support roller (45) is pivot-mounted.

6. Canvas roller device according to either of the preceding Claims 3 or 5, **characterised in that** the at least one roller (34, 35; 62, 63) and the support roller (45) are arranged on the same side of the support bracket (38).

7. Canvas roller device according to any one of the preceding claims, **characterised in that** it has a diverter element (42) for diverting a connection section (8a) of the canvas curtain (7, 7') by means of which the connection of the canvas curtain (7, 7') to the fastening element (40, 66a) of the canvas roller device (30, 60, 61) is carried out.

8. Canvas roller device according to Claim 7, **characterised in that** the diverter element (42) is formed in an area of the support bracket (38) which in the usage position of the canvas roller device (30, 60, 61) is arranged below the rotational axis (D1, D2) of the at least one roller (34, 35; 62, 63).

9. Canvas roller device according to Claim 7 or 8, **characterised in that** the diverter element is a web (42) formed on the support bracket (38).

10. Canvas roller device according to any one of the preceding claims, **characterised in that** the fastening element (66a) is formed on an extension (66) of the at least one axis (64, 65) on which the at least one roller (62, 63) is mounted.

11. Commercial vehicle having a canvas cover (6) which defines a cargo area (12) and comprises a beam (18, 19) extending in the longitudinal direction (LZ) of the commercial vehicle (1) and on which, by means of at least one canvas roller device (30, 60, 61) designed according to any one of Claims 1 to 10, a side canvas curtain (7, 7') is mounted such that it is longitudinally moveable between a closed position, in which the side canvas curtain (7, 7') closes off the cargo area (12) with respect to the surroundings (U), and an open position, in which a side opening is made available for loading or unloading the cargo area (12).

12. Commercial vehicle according to Claim 11, **characterised in that** the beam (18, 19) supports a sealing element (49) which extends along the beam (18, 19) and comprises a sealing lip (48) which, when the side canvas curtain (7, 7') is in the closed position, rests on the outside of the side canvas curtain (7, 7') in an upper edge region (7b) and facing away from the cargo area (12).

## Revendications

1. Enrouleur de bâche pour un logement déplaçable d'une bâche latérale (7, 7') sur un guide (32) d'une structure de bâche (6) pour un véhicule utilitaire (1),
- avec au moins un rouleau (34, 35 ; 62, 63) sollicité, en utilisation, par le poids de la bâche (7, 7') dans le sens de la gravité (S), ce rouleau étant logé mobile en rotation sur un axe (36, 37 ; 64, 65) autour d'un axe de rotation (D1, D2), cet axe de rotation étant orienté, lorsque l'enrouleur de bâche (30, 60, 61) est maintenu en position d'utilisation, transversalement par rapport au sens de la gravité (S),
- avec un élément de butée (40, 66a) pour faire venir en butée la bâche (7, 7') sur l'enrouleur de bâche (30, 60, 61),
et
- avec une patte de support (38) qui porte les rouleaux (34, 35),
- où l'élément de butée (40, 66a) est agencé, lorsque l'enrouleur de bâche (30, 60, 61) se trouve en position d'utilisation, à la même hauteur ou au-dessus de l'axe de rotation (D1, D2) du rouleau (34, 35 ; 62, 63)
**caractérisé en ce que**
l'élément de butée est formé par une traverse (40) portée par la patte de support (38).

2. Enrouleur de bâche selon la revendication 1, **caractérisé en ce qu'**il comporte, en plus dudit rouleau (34 ; 62), au moins un autre rouleau (35 ; 63) qui est agencé espacé du premier rouleau (34 ; 62) et qui est rotatif autour d'un axe de rotation (D2), lequel est orienté de façon axialement parallèle par rapport à l'axe de rotation (D1) du premier rouleau (34 ; 62) et **en ce que** l'élément de butée (40, 66a) est agencé, lorsque l' enrouleur de bâche (30, 60, 61) se trouve en position d'utilisation, à la même hauteur ou au-dessus d'une ligne droite (G) croisant les axes de rotation (D1, D2) des rouleaux (34, 35 ; 62, 63).

3. Enrouleur de bâche selon l'une des revendications précédentes, **caractérisé en ce qu'**il comporte un rouleau de support (45) qui est logé en rotation autour d'un axe de rotation, lequel est orienté transversalement par rapport à l'axe de rotation (D1, D2) du au moins un rouleau (34, 35 ; 62, 63) de telle façon que, lorsque l'enrouleur de bâche (30, 60, 61) est orienté en position d'utilisation, le mouvement de rotation du rouleau de support (45) a lieu dans un plan orienté transversalement par rapport au sens de la gravité (S).

4. Enrouleur de bâche selon l'une des revendications précédentes, **caractérisé en ce que** la traverse (40) est conçue entre le bord supérieur (31) de la patte de support (38) en position d'utilisation, et une fenêtre formée dans la patte de support (38).

5. Enrouleur de bâche selon la revendication 3, **caractérisé en ce que** la patte de support (38) présente une section principale et une section de support (43) faisant saillie de la section principale (43), sur laquelle section de support est logé en rotation le rouleau de support (45).

6. Enrouleur de bâche selon l'une des revendications précédentes 3 ou 5, **caractérisé en ce que** le au moins un rouleau (34, 35 ; 62, 63) et le rouleau de support (45) sont agencés du même côté de la patte de support (38).

7. Enrouleur de bâche selon l'une des revendications précédentes, **caractérisé en ce qu'**il présente un élément de déviation (42) pour la déviation d'une section de raccordement (8a) de la bâche (7, 7'), à l'aide de laquelle section de déviation a lieu le raccordement de la bâche (7, 7') à l'élément de butée (40, 66a) de l'enrouleur de bâche (30, 60, 61).

8. Enrouleur de bâche selon la revendication 7, **caractérisé en ce que** l'élément de déviation (42) est formé dans une zone de la patte de support (38), ladite zone étant agencée, lorsque l'enrouleur de bâche (30, 60, 61) est en position d'utilisation, en dessous de l'axe de rotation (D1, D2) de l'au moins un rouleau (34, 35 ; 62, 63).

9. Enrouleur de bâche selon la revendication 7 ou 8, **caractérisé en ce que** l'élément de déviation est une traverse (42) conçue sur la patte de support (38).

10. Enrouleur de bâche selon l'une des revendications précédentes, **caractérisé en ce que** l'élément de butée (66a) est conçu sur une prolongation (66) de l'au moins un axe (64, 65) sur lequel est logé le au moins un rouleau (62, 63).

11. Véhicule utilitaire avec une structure de bâche (6) qui définit un espace de chargement (12) et qui comporte un support (18, 19) s'étendant dans la direction longitudinale (LZ) du véhicule utilitaire (1), sur lequel est logée une bâche latérale (7, 7') à l'aide d'au moins un enrouleur de bâche (30, 60, 61), conçu selon l'une des revendications 1 à 10, entre une position fermée, dans laquelle la bâche latérale (7, 7') renferme l'espace de chargement (12) par rapport à l'environnement (U), et une position ouverte coulissante longitudinalement, dans laquelle une ouverture latérale pour le chargement ou déchargement de l'espace de chargement (12) est dégagée.

12. Véhicule utilitaire selon la revendication 11, **caractérisé en ce que** le support (18, 19) porte un élément d'étanchéité (49) s'étendant le long du support (18, 19), lequel élément d'étanchéité comporte une lèvre d'étanchéité (48), laquelle, lorsque la bâche latérale (7, 7') se trouve en position fermée, repose dans une zone de bordure supérieure (7b) sur le côté extérieur de la bâche latérale (7, 7') détourné de l'espace de chargement (12).
